**Europäisches Patentamt**

**European Patent Office**

**Office européen des brevets**

(19)

(11) Veröffentlichungsnummer: **0 219 745 B1**

(12) **EUROPÄISCHE PATENTSCHRIFT**

(45) Veröffentlichungstag der Patentschrift:
15.02.89

(21) Anmeldenummer: 86113648.9

(22) Anmeldetag: 02.10.86

(51) Int. Cl.⁴: **F27D 15/02**, C04B 7/47, F27B 7/38, C22B 1/26, B01J 8/44

(54) Vorrichtung zum Kühlen von heissem Gut.

(30) Priorität: 25.10.85 DE 3538059

(43) Veröffentlichungstag der Anmeldung:
29.04.87 Patentblatt 87/18

(45) Bekanntmachung des Hinweises auf die Patenterteilung:
15.02.89 Patentblatt 89/7

(84) Benannte Vertragsstaaten:
BE DE ES FR GB IT

(56) Entgegenhaltungen:
BE-A- 419 270
DE-A- 1 022 958
DE-A- 1 108 606
DE-A- 1 170 307
DE-B- 1 508 585

ZEMENT-KALK-GIPS, Band 38, Nr. 2, Februar 1985, Seiten 87-89, Wiesbaden, DE; K. VON WEDEL: "Neue Klinkerverteilung für Rostkühler"

(73) Patentinhaber: Krupp Polysius AG,
Graf-Galen-Strasse 17, D-4720 Beckum(DE)

(72) Erfinder: Eiring, Karl, Theodor-Naarmann-Strasse 21, D-4740 Oelde(DE)
Erfinder: Dürr, Manfred, Dipl.-Ing., Im Bulte 18, D-4740 Oelde(DE)
Erfinder: Schmits, Heinz-Herbert, Dipl.-Ing., Berliner Strasse 6a, D-4840 Rheda-Wiedenbrück(DE)

(74) Vertreter: Tetzner, Volkmar, Dr.-Ing. Dr. jur., Van-Gogh-Strasse 3, D-8000 München 71(DE)

ACTORUM AG

## Beschreibung

Die Erfindung betrifft eine Vorrichtung zum Kühlen von aus einem Ofenauslauf kommendem, heißem Gut, gemäß dem Oberbegriff des Anspruches 1.

Kühlvorrichtungen der vorausgesetzten Art werden verwendet, um das zuvor in einem Ofen gebrannte Gut (z.B. Zementklinker oder andere mineralischen Güter) unmittelbar anschließend in der gewünschten Weise stark abzukühlen. Bei diesen Vorrichtungen kann es sich insbesondere um sog. Wanderrostkühler, Schubrostkühler und dergleichen handeln. Das aus dem Ofenauslauf kommende, glühend heiße Gut soll im Guteinlaufteil der Kühlvorrichtung eine erste starke Abkühlung erfahren und dann möglichst gut verteilt auf den Rost geleitet werden, auf dem dann die Hauptkühlarbeit geleistet wird, während das zu kühlende Gut in Längsrichtung weitertransportiert wird. Zumindest die im Guteinlaufteil der Kühlvorrichtung durch das heiße Gut hindurchgeblasene Kühlluft soll im allgemeinen als erhitzte Verbrennungsluft in dem vorgeschalteten Ofen wieder- bzw. weiterverwendet werden.

Eine Kühlvorrichtung der vorausgesetzten Art ist in der Zeitschrift "Zement – Kalk – Gips", Bd. 38, Nr. 2, Februar 1985, Seiten 87–89 beschrieben. Eine ähnliche Kühlvorrichtung ist aus der DE-AS 1 108 606 bekannt. In diesem Falle ist die Gutüberleiteinrichtung im Guteinlaufteil in Form einer der Gutböschung angepaßten, gemauerten Rutsche ausgebildet, in deren Gutförderfläche ein quer zur Fließrichtung des heißen Gutes bewegliches Organ angeordnet ist. Bei dieser bekannten Ausführung der Gutüberleiteinrichtung muß insbesondere mit einem entsprechenden konstruktiven Aufwand für die Anordnung und Funktion des beweglichen Organs, einem beträchtlichen Abrieb der mit dem abwärtsrutschenden Gut in Berührung stehenden Rutschenoberfläche sowie mit einem pilzartigen Aufbauen (Anwachsen) von heißem Gut auf der Rutschenoberfläche gerechnet werden.

Der Erfindung liegt die Aufgabe zugrunde, eine Kühlvorrichtung der im Oberbegriff des Anspruches 1 vorausgesetzten Art zu schaffen, bei der insbesondere der Guteinlaufteil eine gegenüber dem Stand der Technik verbesserte Gutüberleiteinrichtung aufweist, die sich durch eine besonders gute Wärmerekuperation, Gutverteilung und weitgehende Vermeidung der erwähnten Pilzbildung auszeichnet. Außerdem ist es wünschenswert, daß in dem abwärts laufenden Gut sogenannte "red river" verhindert werden (unter "red river" versteht man im wesentlichen rot glühende, ungekühlte Gutsträhnen, z.B. Klinkersträhnen).

Diese Aufgabe wird erfindungsgemäß durch die im Kennzeichen des Anspruches 1 angegebenen Merkmale gelöst.

Hierdurch baut sich über den Tragelementen eine Schüttung des aus dem Ofenauslauf kommenden heißen Gutes auf, die durch die gezielt zugeführte Kühlluft rasch und intensiv abgekühlt wird. Die relativ stark abgekühlte Gutschüttung baut sich unter einem dem jeweiligen Gut eigenen natürlichen Böschungswinkel auf und bildet für das nachkommende heiße Gut zumindest eine Aufprallschicht, so daß während des normalen Betriebes kein nachkommendes heißes Gut über die luftdurchlässigen Tragelemente der Gutüberleiteinrichtung läuft, wodurch kaum oder gar kein Verschleiß an den Tragelementen auftritt und diese somit relativ einfach ausgeführt sein können. Der sich ausbildende natürliche Böschungswinkel zum einen und die in den Längsseiten der Tragelemente vorgesehenen, etwa in Gutförderrichtung ausgerichteten Luftdurchtrittslöcher zum anderen tragen dann sowohl zu einem zuverlässigen Transport und zu einer besonders guten Verteilung des Gutes über die ganze Rostbreite als auch zu einer besonders intensiven Kühlwirkung des heißen Gutes bei, mit einer optimalen Wärmerekuperation. Durch diese Wirkungsweise der erfindungsgemäßen Konstruktion ist ferner eine gesonderte Wasser- oder Luftkühlung der mit Gut in Berührung kommenden Flächen der Gutüberleiteinrichtung (wie es bei bekannten Ausführungen vielfach erforderlich ist) überflüssig, und die oben erwähnte Pilzbildung an der Oberfläche der Gutüberleiteinrichtung wird weitgehend vermieden; aufgrund der intensiven und gezielten Kühllufteinführung in die gebildete Gutschüttung wird auch die Ausbildung der weiter oben erwähnten "red river" wirkungsvoll verhindert.

Weitere Einzelheiten und Vorteile der Erfindung ergeben sich aus den Unteransprüchen sowie aus der folgenden Beschreibung einiger anhand der Zeichnung veranschaulichter Ausführungsbeispiele. In dieser Zeichnung zeigen

Fig. 1 eine vereinfachte Längsschnittansicht insbesondere durch den Guteinlaufteil der Kühlvorrichtung;

Fig. 2 eine vergrößerte Detail-Querschnittsansicht (durch ein luftdurchlässiges Tragelement) entsprechend Ausschnitt II in Fig. 1;

Fig. 3 eine ähnliche Detail-Querschnittsansicht wie Fig. 2, jedoch bei einer anderen Querschnittsform der Tragelemente;

Fig. 4 und 5 stark vereinfachte, schematische Aufsichten auf den Guteinlaufteil, zur Erläuterung von zwei verschiedenen Ausführungsformen mit unterschiedlichen Kühlluftzuführsystemen;

Fig. 6 eine der Fig. 1 ähnliche Teil-Längsschnittansicht des Guteinlaufteiles, insbesondere der Gutüberleiteinrichtung, eines anderen Ausführungsbeispieles;

Fig. 7 eine Teil-Querschnittsansicht entlang der Linie VII–VII in Fig. 6;

Fig. 8 eine Schnittansicht durch zwei Tragelemente einer weiteren Ausführungsform (Anordnung von Zwischenkästen);

Fig. 9 eine Teil-Längsschnittansicht (ähnlich Fig. 1) des Guteinlaufteiles für ein weiteres Beispiel (mit Drehstempel).

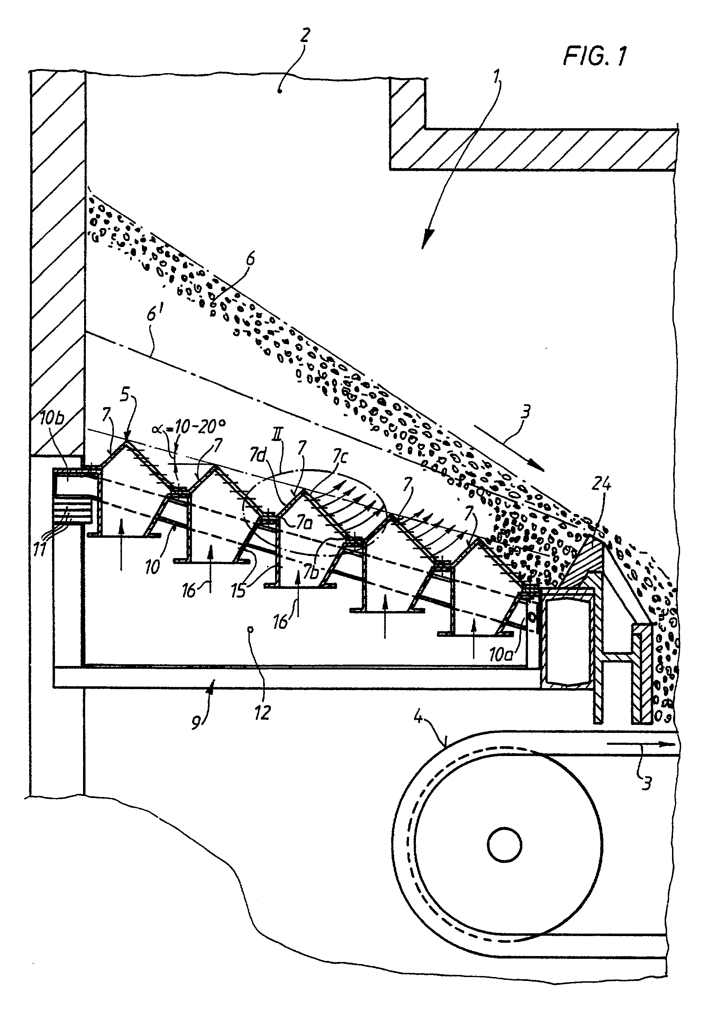

Unter Bezugnahme auf Fig. 1 sei zunächst der allgemeine Aufbau der erfindungsgemäßen Kühlvorrichtung anhand eines ersten Beispieles beschrieben.

Von dieser Kühlvorrichtung ist in Fig. 1 in der Hauptsache der Guteinlaufteil 1 veranschaulicht, der sich im Bereich zwischen dem nur angedeuteten Auslauf 2 eines Brennofens (z.B. eines Drehrohrofens) und dem – in Gutförderrichtung (Pfeil 3) betrachtet – hinteren Ende eines in diesem Beispiel als Wanderrost 4 angedeuteten Rostes befindet. Der Wanderrost 4 kann in herkömmlicher Konstruktion ausgeführt sein, so daß seine nur ganz schematische Andeutung für die Erläuterung der vorliegenden Erfindung genügen dürfte. Es sei aber bereits an dieser Stelle ausdrücklich erwähnt, daß der Rost nicht nur in Form eines Wanderrostes, sondern auch in Form jedes anderen geeigneten Rostes, wie z.B. eines Schubrostes, ausgeführt sein kann.

Der Guteinlaufteil 1 ist mit einer gegen den Rost 4 geneigten, allgemein mit 5 bezeichneten Gutüberleiteinrichtung ausgestattet, die – wie im einzelnen noch erläutert wird – das aus dem Ofenauslauf 2 ausfallende heiße Gut 6 aufnimmt, einer ersten intensiven Abkühlung mittels Kühlluft unterwirft und gleichmäßig auf das hintere Ende des Wanderrostes 4 verteilt, auf dem es in an sich bekannter und daher nicht näher veranschaulichter Weise ebenfalls von Kühlluft durchströmt, getragen und zu einem hier nicht näher veranschaulichten Auslauf der Kühlvorrichtung weitergefördert wird.

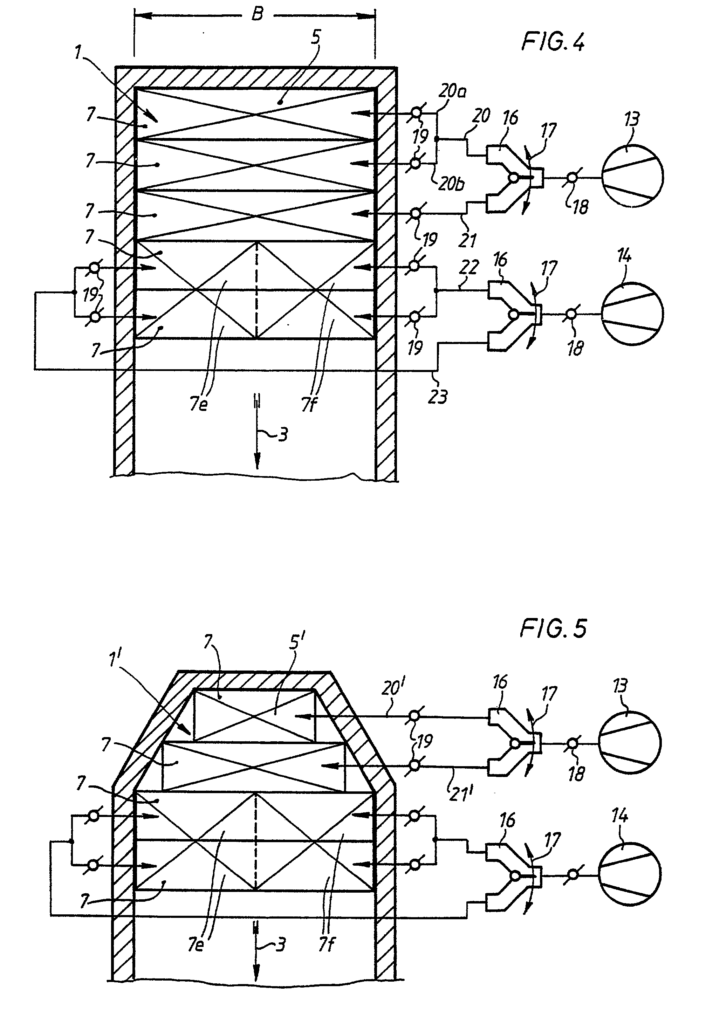

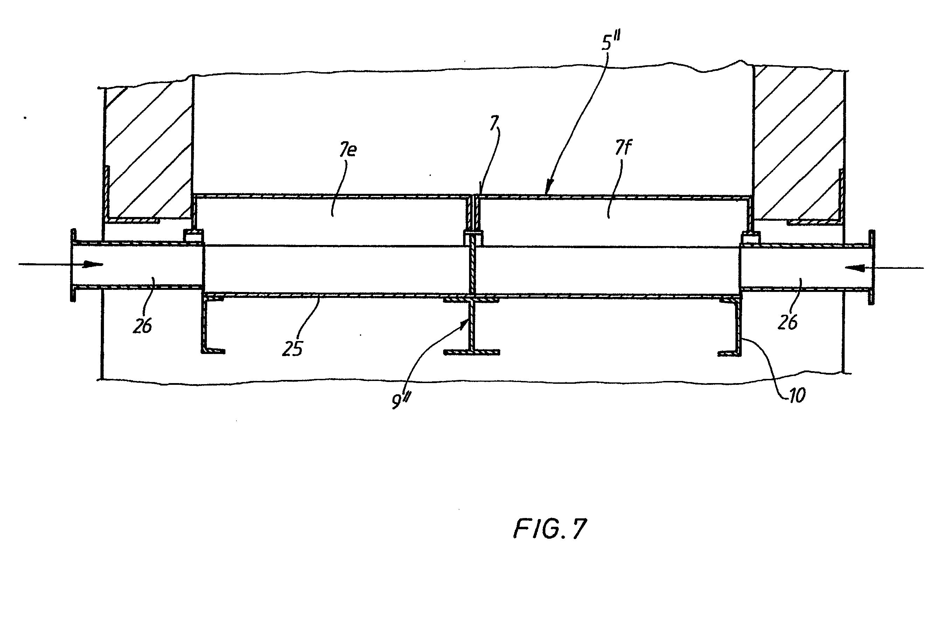

Von besonderem Interesse ist die Gestaltung und Zusammenordnung der Gutüberleiteinrichtung 5. Diese Gutüberleiteinrichtung 5 enthält in dem in Fig. 1 veranschaulichten Beispiel fünf einzelne, längliche, sich quer über die Breite B (vgl. Fig. 4) des Einlaufteiles 1 erstreckende, luftdurchlässige Tragelemente 7, die in diesem Falle eine etwa spitzdachartige Querschnittsform aufweisen und an ihren einander benachbarten Längsrändern (z.B. 7a und 7b) gegeneinander abgedichtet und miteinander verbunden (beispielsweise durch dort vorgesehene Flansche verschraubt) sind.

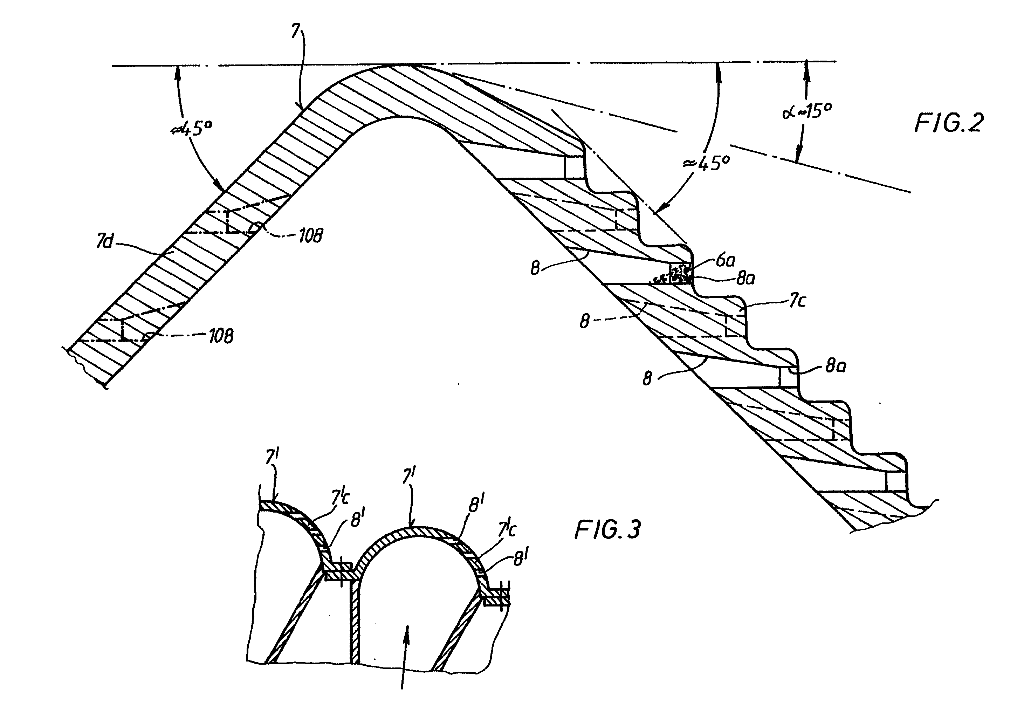

Diese luftdurchlässigen Tragelemente 7 sind – wie sich neben der Fig. 1 auch aus der Fig. 2 deutlich ersehen läßt – jeweils an ihrer in Richtung auf den Wanderrost 4 weisenden Längsseite mit einer Vielzahl von Luftdurchtrittslöchern 8 versehen, die mit rundem, schlitzförmigem oder jedem anderen geeigneten Querschnitt kanalförmig durchgehend in diesen Längsseiten 7 c – entsprechend Fig. 2 – ausgebildet und etwa in Gutförderrichtung (Pfeil 3) ausgerichtet sind. Die Luftdurchtrittslöcher 8 können dabei horizontal (in der Fig. 1 und 2 veranschaulichten Weise) oder auch unter einem spitzen Winkel zur Horizontalen (vorzugsweise etwas nach oben gerichtet) ausgerichtet sein. In besonders vorteilhafter Weise verjüngen sich diese Luftdurchtrittslöcher 8 zu ihrer Austrittsöffnung 8a hin, so daß sich eine gewisse Düsenwirkung und evtl. auch eine Förderwirkung ergibt. Diese Luftdurchtrittslöcher 8 sind gleichmäßig über die Längsseite 7c jedes Tragelements 7 verteilt, wobei sie in mehreren Reihen übereinander sowie in einander benachbarten Reihen auf Lücke versetzt zueinander angeordnet sein können. Diese Tragelement-Längsseiten 7c können ferner eine im wesentlichen ebene Oberfläche oder eine – im Querschnitt eines Tragelements 7 betrachtet –. etwa stufenförmige Oberseite aufweisen, wobei die Austrittsöffnungen 8a 'der Luftaustrittslöcher 8 dann jeweils in dem etwa senkrecht verlaufenden Teil einer Stufe ausmünden. In jedem Falle sollte die Lage und Ausrichtung dieser Löcher 8 derart sein, daß – wie in Fig. 2 durch eine Gutanhäufung 6a im Bereich einer Austrittsöffnung 8a der Löcher 8 angedeutet – kein zu kühlendes Gut durch diese Löcher 8 in das Innere der Tragelemente 7 durchfließen kann.

Die mit Luftdurchtrittslöchern 8 versehenen Längsseiten 7c jedes Tragelements 7 verlaufen unter einer Neigung von etwa 35 bis 60°, vorzugsweise etwa 40 bis 50° (im Falle der Fig. 1 und 2 ist eine Neigung von 45° dargestellt); etwa die gleiche Neigung kann auch die andere, gegenüberliegende Längsseite 7d jedes Tragelements, also die vom Rost 4 agbewandte rückwärtige Längsseite, besitzen. Diese rückwärtigen Längsseiten 7d der Tragelemente 7 sind im veranschaulichten Ausführungsbeispiel gemäß Fig. 2 vollkommen geschlossen (also ohne Luftdurchtrittslöcher 8) ausgeführt. Wie allerdings strichpunktiert in Fig. 2 angedeutet ist, können im Bedarfsfalle auch in diesen rückwärtigen Längsseiten 7d gleichartig wie in den Längsseiten 7c ausgebildete Luftdurchtrittslöcher 108 vorgesehen werden, was beispielsweise einer verbesserten Auflockerung der über den Tragelementen 7 liegenden Gutschüttung dienen kann.

Diese rückwärtigen Längsseiten 7d jedes Tragelements 7 sind ferner – im Querschnitt gemäß Fig. 1 und 2 betrachtet – vorzugsweise etwas schmaler bzw. kürzer gehalten als die ersten, mit den Luftdurchtrittslöchern 8 versehenen Längsseiten 7c. Durch die weiter oben erwähnte Verbindung der in Gutförderrichtung aufeinanderfolgenden Tragelemente 7 an ihren einander benachbarten Längsrändern 7a, 7b ergibt sich durch die zuvor erwähnte unterschiedliche Größe der Längsseiten 7c und 7d somit insgesamt eine Zusammenordnung aller sich quer erstreckender Tragelemente 7 mit einer Neigung $\alpha$ zwischen etwa 10 und 20°.

Wie insbesondere in Fig. 1 grob angedeutet ist, sind die luftdurchlässigen Tragelemente 7 darüber hinaus vorzugsweise noch in einem gemeinsamen, rahmenartigen Trägergestell 9 angeordnet, wobei sich die in der erwähnten Weise miteinander verbundenen Tragelemente 7 auf einem schräg verlaufenden Träger 10 des Trägergestells 9 direkt abstützen.

Damit die Zusammenordnung der Tragelemente 7 im Bedarfsfalle in ihrer Gesamtneigung zwischen etwa 10 und 20° eingestellt werden kann, kann es vorgezogen werden, den Träger 10 an seinem einen Ende, beispielsweise an seinem unteren Ende 10a (in Fig. 1 am rechten Ende) gelenkig zu haltern oder einzuklemmen, während sein entgegengesetztes oberes Ende 10b (in Fig. 1 links) etwa durch plattenförmige Futterstücke 11 in der Höhe verändert bzw. eingestellt werden kann.

Eine andere Ausführungsform ist in Fig. 3 angedeutet. Hiernach besitzen die luftdurchlässigen Tragelemente 7' eine etwa kreisbogenartige Querschnittsform. Die Luftdurchtrittslöcher 8' sind wiederum auf den zum Rost (hier nicht dargestellt) weisenden Längsseiten 7'c so angeordnet und ausgebildet, daß sie etwa in Gutförderrichtung weisen, wie es anhand der Fig. 1 und 2 erläutert ist. Die Verbindung der einander benachbarten Tragelemente 7 kann – wie in Fig. 3 zu erkennen – in gleicher Weise erfolgen (beispielsweise durch eine Flansch-Schrauben-Verbindung der einander benachbarten Längsränder), wie es im ersten Beispiel erläutert worden ist.

Das Trägergestell 9 ist gehäuseartig geschlossen, so daß sich – wie anhand Fig. 1 zu erkennen – ein Innenraum 12 ergibt, dem – wie in Fig. 4 zu erkennen ist und nachstehend noch im einzelnen erläutert wird – wenigstens ein Kühlluftgebläse 13 zugeordnet ist; im vorliegenden Beispiel sind jedoch zwei Kühlluftgebläse 13, 14 vorgesehen. In Fig. 1 ist ferner zu erkennen, daß die unteren Teile der einzelnen Tragelemente 7 in Form von Kühlluft-Zuführstutzen 15 ausgebildet sind, so daß – wie in Fig. 1 durch Pfeile 16 angedeutet ist – die einzelnen luftdurchlässigen Tragelemente 7 von unten her, d.h. vom Innenraum 12 her – von Kühlluft angeströmt werden können.

Es hat sich nun als besonders vorteilhaft erwiesen, daß diese Tragelemente 7 nicht einfach gemeinsam und gleichzeitig vom Kühlluftgebläse (Gebläsen) 13 bzw. 14 mit Kühlluft beaufschlagt werden, sondern daß es vorzuziehen ist, die Kühlluft pulsierend den einzelnen Tragelementen 7 oder Gruppen von Tragelementen zuzuführen, und zwar in der Weise, daß einander benachbarte Tragelemente 7 bzw. Tragelementgruppen abwechselnd mit dem zugehörigen Gebläse 13 bzw. 14 im Sinne einer Kühlluftzuführung verbunden werden. Zu diesem Zweck ist zwischen jedem Kühlluftgebläse 13 bzw. 14 und den zugehörigen Tragelementen 7 bzw. Gruppen von Tragelementen ein Pulsator 16 zugeordnet (vgl. Fig. 4), der in Richtung des angegebenen Doppelpfeiles 17 vorzugsweise motorisch und regelbar in einem bestimmten Rhythmus (mit einer Frequenz von beispielsweise 1 Hz) umgestellt werden kann, um dadurch die abwechselnde, pulsierende Kühlluftbeaufschlagung der Tragelemente 7 zu steuern. Hierbei wird es weiterhin vorgezogen, zwischen jedem Gebläse 13 bzw. 14 und dem zugehörigen Pulsator 16 eine Drosselklappe 18 für eine Luftmengeneinstellung und zwischen den Pulsatoren 16 und den einzelnen Tragelementen 7 weitere Drosselklappen 19 für die gewünschte Luftaufteilung anzuordnen.

Damit die zuvor erwähnte Einzelbeaufschlagung bzw. Gruppenbeaufschlagung der Tragelemente 7 mit Kühlluft in der erforderlichen Weise durchgeführt werden kann, ist der Innenraum 12 des Trägergestells 9 in wenigstens zwei Kammern mit entsprechend zugeordneten Kühlluftzuführstutzen der Tragelemente 7 unterteilt. Dies bedeutet, daß der Trägergestell-Innenraum 12 zumindest in eine der Anzahl der luftdurchlässigen Tragelemente 7 entsprechende Zahl von Kammern unterteilt ist, wenn jedes Tragelement 7 einzeln mit dem zugehörigen Kühlluftgebläse 13 bzw. 14 verbindbar sein soll, während es sich entsprechend angepaßt verhält, wenn zumindest einige Tragelemente 7 zu einer gemeinsam belüftbaren Gruppe zusammengefaßt sind. Nähere Einzelheiten zu diesen Beaufschlagungsmöglichkeiten ergeben sich aus den folgenden Belüftungsbeispielen gemäß den Fig. 4 und 5.

Es sei zunächst auf Fig. 4 Bezug genommen, bei der es sich um eine ganz schematisch gehaltene Aufsicht auf den Einlaufteil 1 handelt, der anhand Fig. 1 veranschaulicht und erläutert worden ist. Demnach sind im Guteinlaufteil 1 bzw. in der den belüftbaren Einlaufteil-Boden bildenden Gutüberleiteinrichtung 5 ebenfalls fünf luftdurchlässige Tragelemente 7 in Gutförderrichtung (Pfeil 3) hintereinander angeordnet, wobei sich alle Tragelemente – wie bereits weiter oben erläutert – über die ganze Breite B des Einlaufteiles 1 erstrecken.

Betrachtet man nun die Kühlluftbeaufschlagung dieser Zusammenordnung von Tragelementen 7, dann sind – in Richtung der Gutförderrichtung (Pfeil 3) betrachtet – die beiden hintersten Tragelemente 7 über ihre Zweigleitungen 20a, 20b an eine gemeinsame Verbindungsleitung 20 angeschlossen, die von einer Seite des zugehörigen Pulsators 16 kommt, während das drittletzte Tragelement 7 (also das mittlere Tragelement) über eine einzelne Verbindungsleitung 21 mit der anderen Seite des Pulsators 16 verbunden ist. Dies bedeutet, daß die beiden hintersten Tragelemente 7 als Gruppe zusammengefaßt und gemeinsam mit Kühlluft beaufschlagt werden (bei entsprechender Einstellung des Pulsators 16) und daß das drittletzte Tragelement 7 alleine, und zwar im Wechsel und pulsierend mit den beiden hintersten Tragelementen 7 von Kühlluft durchströmt wird.

Etwas anders verhält es sich mit den beiden vordersten, d.h. dem Rost 4 benachbarten Tragelementen 7. Diese sind nämlich in Querrichtung, d.h. etwa in Mitte der Breite B in zwei nebeneinanderliegende Kühlluftabteile 7e und 7f aufgeteilt, wobei sie jedoch über ihre Drosselklappen 19, gemeinsamen Verbindungsleitungen 22 bzw. 23, den zugehörigen Pulsator 16 und die Drosselklappe 18 an dasselbe Kühlluftgebläse 14 angeschlossen sind. Diese beiden nebeneinanderliegenden Kühlluftabteile 7e und 7f beider vorderen Tragelemente 7 können somit über den zugehörigen Pulsator 16 abwechselnd und pulsierend mit Kühlluft beaufschlagt werden.

In Fig. 5 ist in Anlehnung an Fig. 4 eine Ausführungsvariante des Guteinlaufteiles (hier daher mit 1' bezeichnet) veranschaulicht. In diesem Falle enthält die Gutüberleiteinrichtung 5' nur vier in Gutförderrichtung (Pfeil 3) hintereinander angeordnete Tragelemente 7, die jedoch in gleicher Weise ausgebildet und zusammengeordnet bzw. abgestützt sein können, wie es anhand der Fig. 1 und 2 näher erläutert ist. Die pulsierende Kühlluftzuführung zu den luftdurchlässigen Tragelementen 7 erfolgt auch in diesem Falle – genau wie gemäß Fig. 4 – mittels zweier Kühlluftgebläse 13 und 14 sowie mittels zweier im Sinne des Doppelpfeiles 17 umschaltbarer Pulsatoren 16, wobei in den Luftzuführ- bzw. Verbindungsleitungen wiederum gleichartige Drosselklappen 18, 19 angeordnet sind. Während im Beispiel der Fig. 4 die beiden – in Gutförderrichtung (Pfeil 3) betrachtet – hintersten Tragelemente 7 als gemeinsam belüftbare Gruppe zusammengefaßt sind, sind in diesem Beispiel (Fig. 5) die beiden hintersten Tragelemente 7 über ihre Verbindungsleitungen 20' bzw. 21' an verschiedene Seiten des Pulsators 16 angeschlossen und somit im Wechsel zueinander einzeln (pulsierend) belüftbar. Der weitere Unterschied dieser Ausführung gemäß Fig. 5 gegenüber der gemäß Fig. 4 liegt in der Grundrißgestaltung des Guteinlaufteiles 1', in dem der Einlaufteil 1' nämlich an seinem – in Gutförderrichtung (Pfeil 3) betrachtet – hinteren Ende, und zwar im Bereich der beiden hintersten Tragelemente 7, symmetrisch verjüngt ist, so daß sich hier ein etwa trapezförmiger Grundriß ergibt und die beiden hinteren Tragelemente 7 somit entsprechend der jeweiligen Breite kürzer gehalten sind.

In beiden gemäß den Fig. 4 und 5 veranschaulichten Ausführungsvarianten können in der erläuterten Weise einander benachbarte Tragelemente bzw. Tragelementgruppen abwechselnd bzw. pulsierend sowie in einstellbaren Mengen mit Kühlluft beaufschlagt werden. Ein besonderer Vorteil dieser pulsierenden Beaufschlagung der luftdurchlässigen Tragelemente 7 mit Kühlluft ist darin zu sehen, daß neben einer günstigen Auflockerung der auf der Gutüberleiteinrichtung 5 bzw. 5' befindlichen Gutschüttung der Guttransport in Richtung des Pfeiles 3 in gezielter Weise unterstützt werden kann. Ferner ergibt sich auf diese Weise eine Umschichtung des in der Schüttung über der Schüttung über der Gutüberleiteinrichtung 5 bzw. 5' befindlichen Gutes 6, so daß dadurch eine besonders gute Mengen- und gleichmäßige Kornverteilung über die gesamte Rostbreite erfolgen kann; diese Maßnahme trägt außerdem dazu bei, daß die eingangs erwähnten "red river" bereits in ihrem Entstehen beseitigt werden können. Zu der sich auf der Gutüberleiteinrichtung 5 bzw. 5' einstellenden Gutschüttung sei noch gesagt, daß diese sich entsprechend der natürlichen Böschung des jeweiligen Gutes einstellen wird.

Bei der anhand Fig. 1 vorgenommenen Erläuterung über die Ausbildung und Zusammenordnung der luftdurchlässigen Tragelemente (zwischen denen sich jeweils gutaufnehmende Rinnen ausbilden) ist davon ausgegangen worden, daß alle Tragelemente 7 bzw. 7' ortsfest auf dem Träger 10 des Trägergestells 9 gehaltert sind. Man kann sich jedoch auch gut vorstellen, ohne daß dies in der Zeichnung besonders veranschaulicht sein muß, daß wenigstens eines der Tragelemente oder auch mehrere in Längsrichtung der Kühlvorrichtung, d.h. in Gutförderrichtung (Pfeil 3), für eine schubartige Bewegung angetrieben werden können. Eine solche Antriebsart einzelner Tragelemente könnte beispielsweise durch Schubstangenantriebe oder dergleichen verwirklicht werden, wie sie aus der Praxis u.a. bei Schubrostkühlern hinreichend bekannt ist.

In jedem Falle kann durch die schubartige Bewegung zumindest eines der Tragelemente die Weiterförderung des heißen Gutes in Richtung des Rostes noch zusätzlich unterstützt werden; gleiches gilt etwa auch für eine Umschichtung des Gutes innerhalb der aus der Gutüberleiteinrichtung lastenden Schüttung.

Während es bei der Ausbildung und der Anordnung der Gutüberleiteinrichtung 5 bzw. 5' in vielen Fällen grundsätzlich ausreichend sein kann, auf dieser Gutüberleiteinrichtung eine weitgehend ruhende Grundschüttung aufrecht zu erhalten, wird es im allgemeinen jedoch vorgezogen, am untern Ende der Gutüberleiteinrichtung 5, also im Übergangsbereich von der Gutüberleiteinrichtung zum Rost 4, ein sich quer über die Breite des Guteinlaufteiles 1 erstreckendes, etwa balkenartig ausgeführtes Gutstauelement 24 anzuordnen, das zusätzlich zum Anstauen einer im wesentlichen ruhenden Gut-Grundschüttung dient, die sich etwa bis zu der strichpunktierten Linie 6' in Fig. 1 einregulieren kann (bei einer Klinkergrundschüttung könnte dies unter einem Winkel von etwa 20° zur Horizontalen – je nach Klinkerkörnung – geschehen). Die Höhe dieses Gutstauelements 24 wird sich im wesentlichen nach der gewünschten Höhe der Grundschüttung (die beispielsweise abhängig sein kann von den zu erwartenden Temperaturen des heißen Gutes und dessen Abrasivität) richten.

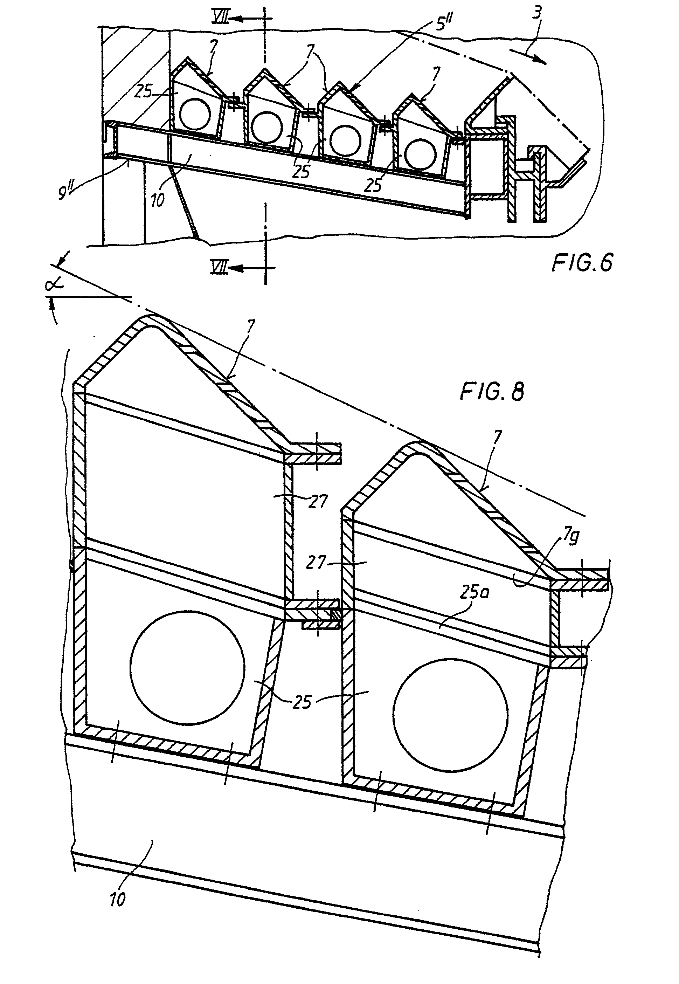

Eine gegenüber dem ersten Ausführungsbeispiel, das zuvor insbesondere anhand der Fig. 1 und 2 erläutert worden ist, abgewandelte Ausführungsform veranschaulichen die Fig. 6 und 7. Abgesehen davon, daß die Gutüberleiteinrichtung 5" in diesem Falle nur vier gleichartig wie im ersten Beispiel ausgeführte und in Gutförderrichtung (Pfeil 3) hintereinander angeordnete Tragelemente 7 enthält, sind diese Tragelemente 7 jedoch nicht im wesentlichen direkt auf dem Träger 10 des Trägergestells 9 abgestützt, sondern jedes Tragelement 7 ist unter Zwischenanordnung eines kammerartigen Kühlluft-Zuführkastens 25 auf dem Trägergestell 9" bzw. dessen Träger 10 abgestützt. Durch diese Ausbildung kann die weiter oben anhand Fig. 1 erläuterte gehäuseartige und geschlossene Ausführung des Trägergestells 9 entfallen, wobei dann jeder Kühlluft-Zuführkasten 25 der einzelnen Tragelemente 7 direkt an den zugehörigen Pulsator bzw. das zugehörige Gebläse (entsprechend Fig. 4 oder 5) angeschlossen ist. Zu diesem Zweck besitzt jeder Kühlluft-Zuführkasten 25 zumindest einen seitlichen Luftanschlußstutzen 26. Wenn es sich demnach – entsprechend den Erläuterungen zu den Fig. 4 und 5 – um hintere Tragelemente 7 handelt (in Gutförderrichtung gemäß Pfeil 3 betrachtet), dann genügt ein einziger seitlicher Luftabschlußstutzen 26 (da diese hinteren Tragelemente 7 über die ganze Einlaufteilbreite gleichzeitig mit Luft beaufschlagt werden), während bei der Ausbildung als vorderes Tragelement 7 auf beiden Seiten je ein Luftanschlußstutzen 26 vorgesehen sein kann (wie in Fig. 7 angedeutet), um die beiden nebeneinander liegenden Kühlluftabteile 7e und 7f desselben Tragelements abwechselnd mit Kühlluft beaufschlagen zu können.

Es ist ferner eine Kombination dieser zuletzt geschilderten Ausführungsform mit der anhand Fig. 1 erläuterten Ausführungsform (bei der das Trägergestell 9 gehäuseartig geschlossen ist) denkbar. Eine solche Kombination bietet sich insbesondere dann an, wenn – wie weiter oben erläutert – einzelne Tragelemente für eine schubartige Bewegung antreibbar ausgeführt sind. In diesem Falle können nämlich dann vorzugsweise die ortsfest gehalterten Tragelemente 7 offen nach unten ausmündende Kühlluft-Zuführstutzen 15 und die bewegbaren Tragelemente Kühlluft-Zuführkästen 25 mit seitlichen Luftanschlußstutzen 26 aufweisen, so daß auch in dieser Ausführungsform die anhand der Fig. 4 und

geschilderten Luftbeaufschlagungsarten ohne Schwierigkeiten realisierbar sind.

Wenn jedes Tragelement 7 auf dem Träger 10 unter Zwischenanordnung eines kammerartigen Kühlluft-Zuführkastens 25 abgestützt ist, dann bietet sich noch eine weitere Ausführungsvariante an, durch die die Gesamtneigung gemäß Winkel α (zwischen 10 und 20°) aller zu einer Gutüberleiteinrichtung gehörenden Tragelemente 7 eingestellt werden kann. Wie Fig. 8 zeigt, kann dann nämlich zwischen jedem Tragelement 7 und dem zugehörigen Kühlluft-Zuführkasten 25 noch ein oben und unten offener Zwischenkasten 27 angeordnet werden, der in Querschnitt und Länge der offenen Unterseite 7g des zugehörigen Tragelements sowie der ebenfalls offenen Oberseite 25a des Kühlluft-Zuführkastens 25 angepaßt ist. Durch eine unterschiedliche vertikale Höhe der einzelnen Zwischenkästen 27 läßt sich damit die Gesamtneigung (Winkel α) der Tragelemente 7 ändern, ohne daß dazu eine Änderung in der Winkeleinstellage des Trägers 10 erforderlich ist.

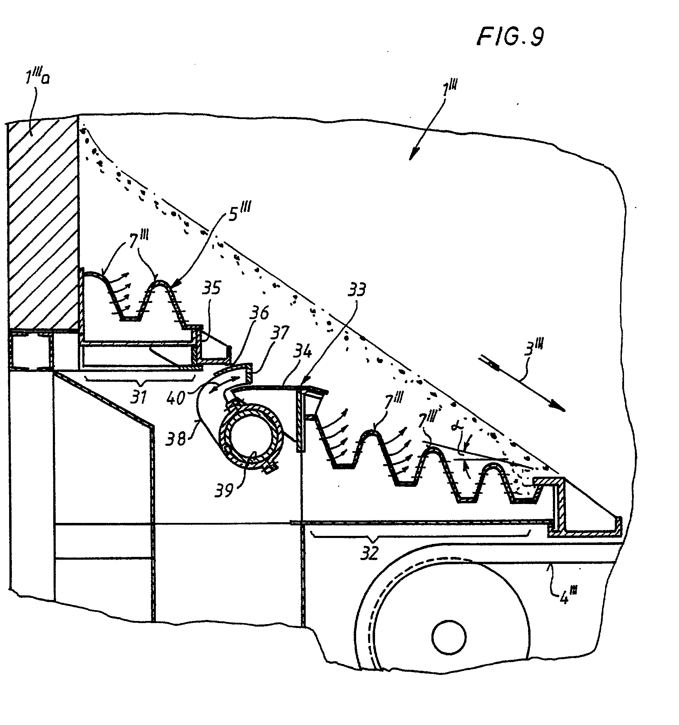

In Fig. 9 ist ein weiteres Ausführungsbeispiel für den Guteinlaufteil 1''' der Kühlvorrichtung veranschaulicht. In dieser Fig. 9 sind etwa gleiche Teile mit denselben Bezugszeichen wie in den vorhergehenden Teilen, jedoch Hinzufügung eines Dreifachstriches bezeichnet, so daß sich die Detailerläuterung dieser Teile weitgehend erübrigt.

Während in den vorhergehenden Beispielen alle querverlaufenden Tragelemente der Gutüberleiteinrichtung in Gutförderrichtung (Pfeil 3''') unmittelbar aneinander anschließen (vgl. insbesondere Fig. 1 und 6), sind im Beispiel der Fig. 9 die Tragelemente 7''' in zwei voneinander getrennten Gruppen 31 und 32 zusammengeordnet, wobei im Bereich der Rückwand 1'''a des Guteinlaufteiles 1''' beispielsweise zwei Tragelemente 7''' eine obere, hintere Tragelementgruppe 31 und im Bereich über dem Einlaufende des Wanderrostes 4''' beispielsweise vier Tragelemente 7''' eine untere, vordere Tragelementgruppe 32 bilden. Zwischen diesen beiden aufeinanderfolgenden Tragelementgruppen 31 und 32 ist ein stufenförmiger Verbindungsabsatz 33 vorgesehen, der eine stufenförmige, ortsfeste und quer über die lichte Breite des Guteinlaufteiles 1''' verlaufende Tragfläche 34 enthält. Zwischen dieser im wesentlichen horizontal ausgerichteten Tragfläche 34 und dem ihr benachbarten Tragelement 7''' der hinteren Tragelementgruppe 31 ist vorzugsweise ein Schleißschutzkasten 35 vorgesehen, der an dem benachbarten Tragelement 7''' befestigt ist und ebenfalls quer über die ganze Lichte des Guteinlaufteiles 1''' verläuft.

Zwischen diesem Schleißschutzkasten 35 und der Oberseite der Tragfläche 34 ist ein Querschlitz 36 vorhanden, in dem wenigstens eine sich quer zum Guteinlaufteil 1''' erstreckende Schubleiste 37 vorgesehen ist. Diese Schubleiste 37 kann sich über die gesamte lichte Breite des Guteinlaufteiles 1''' erstrecken (was im allgemeinen vorgezogen wird), sie kann aber auch nur über einen Teil der ganzen lichten Breite verlaufen, oder es besteht die Möglichkeit, auch mehr als eine solche Schubleiste bzw. eine über die Guteinlaufteilbreite geteilte Schubleiste vorzusehen. In jedem Falle ist diese Schubleiste 37 in Gutförderrichtung (Pfeil 3''') hin- und herbewegbar gehaltert. Aus diesem Grunde ist die Schubleiste 37 Teil eines Drehstempels 38, der drehfest an einer Drehachse 39 angebracht ist, die ihrerseits unterhalb der Gutüberleiteinrichtung 5''' querverlaufend angeordnet ist. Diese Drehachse 39 steht mit einem an sich bekannten (und daher in der Zeichnung nicht näher veranschaulichten) hin- und hergehend betreibbaren Schwenkantrieb in Verbindung, bei dem es sich beispielsweise um einen außerhalb des Gehäuses vom Guteinlaufteil 1''' angeordneten und durch eine auf einen Hebel der Drehachse 39 wirkenden, druckmittelbetriebenen Zylinderantrieb oder Kurbelantrieb handeln kann. Auf diese Weise ist der Drehstempel 38 und somit die von ihm getragene Schubleiste 37 in Richtung des Doppelpfeiles 40 in Gutförderrichtung (Pfeil 3''') innerhalb des Querschlitzes 36 sowie an der Oberseite der Tragfläche 34 hin- und herbewegbar.

Durch das Vorsehen dieses Drehstempels 38 mit der Schubleiste 37 kann auf das im Bereich des stufenförmigen Verbindungsabsatzes 33 lagernde Gut in der Weise eingewirkt werden, daß der Weitertransport des heißen Gutes zusätzlich unterstützt wird, Zusammenbackungen des heißen Gutes vermieden werden und eventuelle Ansatzbildungen bzw. Verkrustungen aufgelöst werden können; gleichzeitig kann aber auch auf eventuell durch die Gutschüttung durchgesackte größere Einzelbrocken so eingewirkt werden, daß Pilzbildungen, wie sie bei bekannten Ausführungen vielfach entstehen, durch den Weitertransport vermieden werden. Wenn darüber hinaus in den Bereich des Querschlitzes 36 und des Drehstempels 38 ebenfalls Kühlluft eingeführt wird, dann trägt dies nicht nur zu einer Kühlung dieser hin- und herbewegbaren Elemente, sondern auch zu einer verbesserten Durchlüftung des in diesem Bereich lagernden Gutes bei.

Der Drehstempel 38 kann über die Drehwelle 39 (und den zugehörigen Antrieb) so angetrieben werden, daß er beispielsweise mit einem Hub von etwa 100 mm und einer Hubzahl von etwa 5–22 pro Minute arbeitet, wobei diese Hubzahl im Bedarfsfalle auch stufenlos regelbar sein kann.

Es versteht sich von selbst, daß die Anzahl der in Gutförderrichtung hintereinander angeordneten, luftdurchlässigen Tragelemente der Größe und den sonstigen Erfordernissen der jeweiligen Kühlvorrichtung angepaßt werden kann. Wie bereits weiter oben erläutert worden ist, können die Luftdurchtrittslöcher in den Tragelementen etwa in Form von Bohrungen oder Schlitzlöchern ausgeführt sein. Dabei ist es ferner vorteilhaft, wenn die Gesamtöffnungsfläche dieser Luftdurchtrittslöcher derart bemessen ist, daß die Kühlluft mit einer Geschwindigkeit von maximal etwa 50 m/s aus den Luftdurchtrittslöchern austritt und mit dieser Geschwindigkeit in das zu kühlende Gut eintritt.

Hinsichtlich der insbesondere anhand der Fig. 4 und 5 erläuterten Queraufteilungen und Belüftungsmöglichkeiten der Tragelemente sei auch noch erwähnt, daß im Bedarfsfalle auch alle Tragelemente in Querrichtung in zwei nebeneinander liegende Kühlluftabteile aufgeteilt werden können.

Die einzelnen Tragelemente selbst können auf einfache Weise gefertigt werden. So kann es vor allem auch vorteilhaft sein, zumindest die mit Gut in Berührung kommenden Teile dieser Tragelemente aus hitzebeständigem Material, insbesondere Stahlguß, und die darunter liegenden Teile aus weniger hitzebeständigem Stahlblech herzustellen; außerdem können die mit Gut in Berührung kommenden Teile der Tragelemente im Bedarfsfalle auch zusätzlich noch mit einer besonders feuerfesten und abriebfesten Schicht bekannter Ausführung versehen sein.

**Patentansprüche**

1. Vorrichtung zum Kühlen von aus einem Ofenauslauf (2) kommendem, heißem Gut (6), enthaltend einen von Kühlluft durchströmten, das zu kühlende Gut tragenden und weiterfördernden Rost (4) sowie einen im Bereich zwischen Ofenauslauf (2) und Rost (4) angeordneten Guteinlaufteil (1, 1', 1''') mit einer gegen den Rost (4) geneigten, mit Kühlluft beaufschlagbaren Gutüberleiteinrichtung (5, 5', 5'', 5'''), die eine Anzahl von sich quer über die Breite (B) des Guteinlaufteiles (1, 1', 1''') erstreckenden Tragelementen (7, 7', 7''') enthält, wobei in der Gutüberleiteinrichtung etwa in Gutförderrichtung (3) gerichtete Luftdurchtrittsöffnungen (8, 8') vorgesehen sind und zumindest gruppenweise zusammengefasste Tragelemente unter einer Gesamtneigung (α) von 10 bis 20° gegenüber der Horizontalen angeordnet sind, dadurch gekennzeichnet, daß die Tragelemente (7, 7', 7''') eine spitzdach- oder kreisbogenartige Querschnittsform aufweisen, so daß zwischen benachbarten Tragelementen gutaufnehmende Rinnen vorhanden sind, wobei die Luftdurchtrittsöffnungen (8, 8') jeweils in der in Richtung auf den Rost (4) weisenden Längsseite der Tragelemente vorgesehen sind.

2. Vorrichtung nach Anspruch 1, dadurch gekennzeichnet, daß die luftdurchlässigen Tragelemente (7) eine etwa spitzdachartige Querschnittsform aufweisen, wobei die die Luftdurchtrittslöcher (8) aufweisende Längsseite (7c) jedes Tragelements unter einer Neigung von etwa 35 bis 60°, vorzugsweise etwa 40 bis 50° zur Horizontalen verläuft.

3. Vorrichtung nach Anspruch 1, dadurch gekennzeichnet, daß die luftdurchlässigen Tragelemente (7') eine etwa kreisbogenartige Querschnittsform besitzen.

4. Vorrichtung nach Anspruch 1, dadurch gekennzeichnet, daß die Luftdurchtrittslöcher (8, 8') der Tragelemente (7, 7') horizontal oder unter einem spitzen Winkel zur Horizontalen ausgerichtet sind.

5. Vorrichtung nach Anspruch 4, dadurch gekennzeichnet, daß die Luftdurchtrittslöcher (8, 8') sich zu ihrer Austrittsöffnung (8a) hin verjüngen.

6. Vorrichtung nach Anspruch 1 und/oder 5, dadurch gekennzeichnet, daß zumindest einige Tragelemente (7) an ihren vom Rost (4) abgewandten, rückwärtigen Längsseiten (7d) gleichartig ausgebildete Luftdurchtrittslöcher (108) aufweisen.

7. Vorrichtung nach Anspruch 1, dadurch gekennzeichnet, daß die luftdurchlässigen Tragelemente (7) auf einem gemeinsamen, rahmenartigen Trägergestell (9) angeordnet und mit diesem in ihrer Gesamtneigung (Winkel α) einstellbar sind.

8. Vorrichtung nach Anspruch 7, dadurch gekennzeichnet, daß das Trägergestell (9) gehäuseartig geschlossen ist, wobei die unteren Teile der Trägerelemente (7) in Form von Kühlluft-Zuführstutzen (15) ausgebildet sind und in den Innenraum (12) des Trägergestells offen ausmünden.

9. Vorrichtung nach Anspruch 8, dadurch gekennzeichnet, daß der Innenraum (12) des Trägergestells (9) wenigstens zwei Kammern mit entsprechend zugeordneten Kühlluft-Zuführstutzen (15) der Trägerelemente (7) unterteilt ist.

10. Vorrichtung nach Anspruch 8 oder 9, dadurch gekennzeichnet, daß dem Innenraum (12) des Trägergestells (9) wenigstens ein Kühlluftgebläse (13, 14) mit Einrichtungen (16) zur pulsierenden Kühlluftzuführung zu den Tragelementen (7) zugeordnet ist.

11. Vorrichtung nach Anspruch 7, dadurch gekennzeichnet, daß jedes Tragelement (7) auf dem Trägergestell (9''', 10) unter Zwischenanordnung eines kammerartigen Kühlluft-Zuführkastens (25) abgestützt ist, der wenigstens einen seitlichen Luftanschlußstutzen (26) besitzt.

12. Vorrichtung nach Anspruch 7 oder 11, dadurch gekennzeichnet, daß die Gesamtneigung (α) der Tragelemente (7) durch plattenartige Futterstücke (11) an wenigstens einem Ende des Trägergestells (9) einstellbar ist.

13. Vorrichtung nach Anspruch 7 oder 11, dadurch gekennzeichnet, daß die Gesamtneigung (α) der Tragelemente (7) durch oben und unten offene Zwischenkästen (27) einstellbar ist, die in Querschnitt und Länge der offenen Unterseite (7g) der zugehörigen Tragelemente angepaßt sind.

14. Vorrichtung nach Anspruch 11, dadurch gekennzeichnet, daß die Kühlluft-Zuführkästen (25) über ihre Luftanschlußstutzen (26) an wenigstens ein Kühlluftgebläse (13, 14) mit zugehörigen Einrichtungen (16) zur pulsierenden Kühlluftzuführung zu den Tragelementen (7) angeschlossen sind.

15. Vorrichtung nach Anspruch 10 oder 14, dadurch gekennzeichnet, daß wenigstens eines der Tragelemente (7) in Querrichtung in zwei nebeneinander liegende Kühlluftabteile (7e, 7f) aufgeteilt ist, die an dasselbe Kühlluftgebläse (14) angeschlossen und abwechselnd mit Kühlluft beaufschlagbar sind.

16. Vorrichtung nach Anspruch 10 oder 14, dadurch gekennzeichnet, daß wenigstens zwei einander benachbarte, an dem Rost (4) entfernt liegenden Ende der Gutüberleiteinrichtung (5) angeordnete Tragelemente (7) an dasselbe Kühlluftgebläse (13) angeschlossen und im Wechsel mit Kühlluft beaufschlagbar sind.

17. Vorrichtung nach Anspruch 1, dadurch gekennzeichnet, daß alle Tragelemente (7, 7') ortsfest gehaltert sind.

18. Vorrichtung nach Anspruch 1, dadurch gekennzeichnet, daß wenigstens ein Tragelement etwa in Längsrichtung der Kühlvorrichtung nach Art eines an sich bekannten Schubrostes für eine schubartige Bewegung antreibbar ist.

19. Vorrichtung nach den Ansprüchen 10 und 14 sowie 17 oder 18, dadurch gekennzeichnet, daß den ortsfest gehaltenen Tragelementen (7) nach unten offen ausmündende Kühlluft-Zuführstutzen (15) und den bewegbaren Tragelementen Kühlluft-Zuführkästen (25) mit seitlichen Luftanschlußstutzen (26) zugeordnet sind.

20. Vorrichtung nach Anspruch 1, dadurch gekennzeichnet, daß zumindest am unteren Ende der Gutüberleiteinrichtung (5) ein sich quer über die Breite (B) erstreckendes Gutstauelement (24) zum Anstauen einer im wesentlichen ruhenden Gut-Grundschicht (6') angeordnet ist.

21. Vorrichtung nach Anspruch 1, dadurch gekennzeichnet, daß zwischen zwei in Gutförderrichtung (3''') einander benachbarten Tragelementen (7''') ein Querschlitz (36) vorhanden ist, in dem wenigstens eine sich quer zum Guteinlaufteil (1''') erstreckende, in Gutförderrichtung hin- und herbewegbare Schubleiste (37) vorgesehen ist, die Teil eines Drehstempels (38) ist, der durch eine unterhalb der Gutüberleiteinrichtung (5''') querverlaufend angeordnete Schwenkachse (39) hin- und hergehend antreibbar ist.

22. Vorrichtung nach Anspruch 21, dadurch gekennzeichnet, daß die Schubleiste (37) im Bereich eines stufenförmigen Verbindungsabsatzes (33) zwischen zwei in Gutförderrichtung (3''') aufeinanderfolgenden Tragelementgruppen (31, 32) vorgesehen ist.

23. Vorrichtung nach Anspruch 1, dadurch gekennzeichnet, daß die Luftdurchtrittslöcher (8, 8', 108) in Form von Bohrungen oder Schlitzlöchern ausgeführt sind.

24. Vorrichtung nach Anspruch 23, dadurch gekennzeichnet, daß die Gesamtöffnungsfläche der Luftdurchtrittslöcher derart bemessen ist, daß die Kühlluft mit einer Geschwindigkeit von maximal ca. 50 m/s in das Gut eintritt.

25. Vorrichtung nach wenigstens einem der vorhergehenden Ansprüche, dadurch gekennzeichnet, daß zumindest die mit Gut in Berührung kommenden Teile der Tragelemente (7, 7' ,7''') aus hitzebeständigem Material, insbesondere Stahlguß, und die darunter liegenden Teile aus weniger hitzebeständigem Stahlblech hergestellt sind.

**Claims**

1. Apparatus for cooling hot material (6) coming out of a kiln outlet (2) and containing a grate (4) which supports and conveys the material to be cooled and through which cooling air flows, also containing a material inlet portion (1, 1', 1''') which is arranged in the region between the kiln outlet (2) and the grate (4) and has a material transfer arrangement (5, 5', 5'', 5''') which is inclined against the grate (4) and acted on by cooling air, and which contains a plurality of individual air-permeable carrier elements (7, 7', 7''') which extend at right angles over the breadth (B) of the inlet portion (1, 1', 1'''), air holes (8, 8') being provided in the material transfer arrangement and directed approximately in the material transport direction (3), and at least carrier elements which are assembled into groups are arranged at a general inclination (α) to the horizontal of 10 to 20°, characterised in that the carrier elements (7, 7', 7''') have a cross-sectional shape which is like a pitched roof or is arcuate so that channels are produced between adjacent carrier elements to hold material, and the air holes (8, 8') are provided in each case in the long side of the carrier elements pointing in the direction of the grate (4).

2. Apparatus as claimed in claim 1, characterised in that the air-permeable carrier elements (7) have a cross-sectional shape like a pointed roof and the long side (7c) of each carrier element which is provided with the air holes (8) is inclined at approximately 35 to 60°, preferably approximately 40 to 50°, to the horizontal.

3. Apparatus as claimed in claim 1, characterised in that the air-permeable carrier elements (7') have an approximately arcuate cross-sectional shape.

4. Apparatus as claimed in claim 1, characterised in that the air holes (8, 8') of the carrier elements (7, 7') are aligned horizontally or at an acute angle to the horizontal.

5. Apparatus as claimed in claim 4, characterised in that the air holes (8, 8') taper towards their outlet openings (8a).

6. Apparatus as claimed in claims 1 and/or 5, characterised in that at least some of the carrier elements (7) have air holes (108) of similar construction on their rearward long sides (7d) facing away from the grate (4).

7. Apparatus as claimed in claim 1, characterised in that the air-permeable carrier elements (7) are arranged in a common frame-like carrier support (9) and are adjustable with the latter in their general inclination (angle α).

8. Apparatus as claimed in claim 7, characterised in that the carrier frame (9) is closed like a housing, and the lower parts of the carrier elements (7) are constructed in the form of cooling air supply pipes (15) and open into the internal space (12) in the carrier frame (9).

9. Apparatus as claimed in claim 8, characterised in that the internal space (12) in the carrier frame (9) is divided into at least two chambers appropriately associated with cooling air supply pipes (15) of the carrier elements (7).

10. Apparatus as claimed in claims 8 or 9, characterised in that the internal space (12) in the carrier frame (9) has at least one cooling air blower (13, 14) associated with it with means (16) for supplying cooling air in pulses to the carrier elements (7).

11. Apparatus as claimed in claim 7, characterised in that each carrier element (7) is supported on the carrier frame (9'', 10) with a chamber-like cooling air supply box (25) interposed, the said cooling air supply box having at least one lateral air connection pipe (26).

12. Apparatus as claimed in claims 7 or 11, characterised in that the general inclination (α) of the carrier elements (7) can be set by plate-like packing pieces (11) at least at one end of the carrier frame (9).

13. Apparatus as claimed in claims 7 or 11, characterised in that the general inclination (α) of the car-

rier elements (7) can be set by intermediate boxes (27) which are open at top and bottom and are adapted in cross-section and length to the open underside (7g) of the appertaining carrier elements.

14. Apparatus as claimed in claim 11, characterised in that the cooling air supply boxes (25) are connected via their air connection pipes (26) to at least one cooling air blower (13, 14) with appertaining means (16) for supplying cooling air in pulses to the carrier elements (7).

15. Apparatus as claimed in claims 10 or 14, characterised in that at least one of the carrier elements (7) is divided in the transverse direction into two cooling air sections (7e, 7f) which lie adjacent to one another, are connected to the same cooling air blower (14) and are acted on alternately by cooling air.

16. Apparatus as claimed in claims 10 or 14, characterised in that at least two carrier elements (7) which are adjacent to one another and arranged on the end of the material transfer arrangement (5) remote from the grate (4) are connected to the same cooling air blower (13) and are acted on alternately by cooling air.

17. Apparatus as claimed in claim 1, characterised in that all the carrier elements (7, 7') are retained so as to be stationary.

18. Apparatus as claimed in claim 1, characterised in that at least one carrier element can be operated in the longitudinal direction like a thrust grate which is known per se to produce a thrust-like movement.

19. Apparatus as claimed in claims 10 and 14 and 17 or 18 characterised in that cooling air supply pipes (15) which open downwards are associated with the stationary carrier elements (7) and cooling air supply boxes (25) with lateral air connection pipes (26) are associated with the movable carrier elements.

20. Apparatus as claimed in claim 1, characterised in that a material damming element (24) which extends transversely over the breadth (B) is arranged at least at the lower end of the material transfer arrangement (5) to dam up an essentially static basic layer of material (6').

21. Apparatus as claimed in claim 1, characterised in that a transverse slot (36) is arranged between two carrier elements (7''') which are adjacent to one another in the material transport direction (3'''), and a thrust bar (37) which extends at right angles to the material inlet portion (1''') and is movable to and fro in the transport direction is provided in the said transverse slot, this thrust bar (37) being part of a rotating ram (38) which can be operated so as to move to and fro by a pivot shaft (39) which is arranged transversely below the material transfer arrangement (5''').

22. Apparatus as claimed in claim 21, characterised in that the thrust bar (37) is provided in the region of a step-like connecting ledge (33) between two groups of carrier elements (31, 32) which succeed one another in the material transfer direction (3''').

23. Apparatus as claimed in claim 1, characterised in that the air holes (8, 8', 108) are constructed in the form of bores or slots.

24. Apparatus as claimed in claim 23, characterised in that the total opening area of the air holes is such that the cooling air enters the material at a maximum speed of approximately 50 m/s.

25. Apparatus as claimed in at least one of the preceding claims, characterised in that at least the parts of the carrier elements (7, 7', 7'''') which come into contact with the material are produced from heat-resistant material, particularly cast steel, and the parts lying below them are produced from less heat-resistant steel plate.

## Revendications

1. Dispositif de refroidissement de charges chaudes (6) provenant de la décharge d'un four (2), comprenant une grille (4) à travers laquelle passe un courant d'air de refroidissement et qui supporte la charge devant être refroidie en faisant progresser son avance, ainsi qu'une zone de réception de la charge (1, 1', 1''') qui est disposée dans la région comprise entre la sortie du four (2) et la grille (4) et qui est équipée d'une installation de transfert de la charge (5, 5' 5'', 5''') qui est inclinée sur la grille (4) et qui est alimentée en air de refroidissement, cette installation comprenant plusieurs éléments porteurs (7, 7', 7''') qui se prolongent transversalement sur la largeur (B) de la zone de réception (1, 1', 1'''), des orifices de passage d'air (8, 8') orientés sensiblement dans le sens du transport de la charge (3) étant prévus dans l'installation de transfert et les éléments porteurs réunis au moins en groupes étant disposés sous une inclinaison globale ($\alpha$) de 10 à 20° sur l'horizontale, caractérisé en ce que les éléments porteurs (7, 7', 7''') ont un profil transversal en faîte de toit ou en arc de cercle de manière qu'il existe des chéneaux logeant de la matière entre les éléments porteurs voisins, les orifices de passage d'air (8, 8') étant prévus dans le côté longitudinal, tourné vers la grille (4), de chacun des éléments porteurs.

2. Dispositif selon la revendication 1, caractérisé en ce que les éléments porteurs (7) perméables à l'air ont un profil transversal sensiblement en faîte de toit, le côté longitudinal (7c) de chaque élément porteur qui comporte les trous de passage d'air (8) étant orienté sous une inclinaison d'environ 35 à 60°, de préférence d'environ 40 à 50° sur l'horizontale.

3. Dispositif selon la revendication 1, caractérisé en ce que les éléments porteurs (7') perméables à l'air ont un profil transversal sensiblement en arc de cercle.

4. Dispositif selon la revendication 1, caractérisé en ce que les trous de passage d'air (8, 8') des éléments porteurs (7, 7') sont orientés horizontalement ou sous un angle aigu par rapport à l'horizontale.

5. Dispositif selon la revendication 4, caractérisé en ce que les trous de passage d'air (8, 8') se rétrécissent vers leur orifice de sortie (8a).

6. Dispositif selon la revendication 1 et/ou 5, caractérisé en ce qu'au moins quelques-uns des éléments porteurs (7) comportent sur leur côté longitudinal arrière (7d), tourné du côté opposé à celui de la grille (4), des trous de passage d'air (108) conformés de manière semblable.

7. Dispositif selon la revendication 1, caractérisé en ce que les éléments porteurs perméables (7) sont disposés sur un châssis de support commun (9) en forme de cadre et leur inclinaison globale (angle α) est réglable avec ce châssis.

8. Dispositif selon la revendication 7, caractérisé en ce que le châssis de support (9) est fermé à la manière d'une cage, la partie inférieure des éléments porteurs (7) étant conformée en tubulure (15) d'alimentation en air de refroidissement et débouchant par une ouverture dans la chambre intérieure (12) du châssis de support.

9. Dispositif selon la revendication 8, caractérisé en ce que la chambre intérieure (12) du châssis de support (9) est subdivisée en au moins deux compartiments équipés de tubulures correspondantes (15) d'alimentation en air de refroidissement des éléments porteurs (7).

10. Dispositif selon la revendication 8 ou 9, caractérisé en ce que la chambre intérieure (12) du châssis de support (9) est équipée d'au moins une soufflante (13, 14) d'air de refroidissement et d'éléments (16) d'alimentation pulsée en air de refroidissement des éléments de support (7).

11. Dispositif selon la revendication 7, caractérisé en ce que chaque élément porteur (7) prend appui sur le châssis de support (9", 10) avec interposition d'un caisson en forme de chambre (25) d'alimentation en air de refroidissement, ce caisson comportant ou moins une tubulure latérale (26) de raccord à l'alimentation de l'air.

12. Dispositif selon la revendication 7 ou 11, caractérisé en ce que l'inclinaison globale (α) des éléments porteurs (7) est réglable au moyen de fourrures (11) en forme de plaques placées au moins à une extrémité du châssis de support (9).

13. Dispositif selon la revendication 7 ou 11, caractérisé en ce que l'inclinaison globale (α) des éléments porteurs (7) est réglable au moyen de caissons intermédiaires (27) ouverts en haut et en bas et dont la section et la longueur correspondent au côté inférieur ouvert (7g) des éléments porteurs correspondants.

14. Dispositif selon la revendication 11, caractérisé en ce que les caissons (25) d'alimentation en air de refroidissement sont raccordés par leurs tubulures correspondantes (26) à au moins une soufflante (13, 14) et à des organes correspondants (16) assurant l'alimentation pulsée en air de refroidissement des éléments porteurs (7).

15. Dispositif selon la revendication 10 ou 14, caractérisé en ce qu'au moins l'un des éléments porteurs (7) est subdivisé transversalement en deux cabines juxtaposées (7e, 7f) d'alimentation en air de refroidissement, ces cabines étant raccordées à la même soufflante (14) et étant alimentées en alternance en air de refroidissement.

16. Dispositif selon la revendication 10 ou 14, caractérisé en ce qu'au moins deux éléments porteurs voisins (7) disposés à l'extrémité de l'installation de transfert (5) qui est située du côté opposé à celui de la grille (4) sont raccordés à la même soufflante (13) et sont alimentés en alternance en air de refroidissement.

17. Dispositif selon la revendication 1, caractérisé en ce que tous les éléments porteurs (7, 7') sont montés en position fixe.

18. Dispositif selon la revendication 1, caractérisé en ce qu'au moins un élément porteur est entraîné de manière à pouvoir exécuter un mouvement de poussée sensiblement dans la direction de la longueur du dispositif de refroidissement suivant le mode d'une grille pousseuse de type connu.

19. Dispositif selon les revendications 10 et 14 ainsi que 17 ou 18, caractérisé en ce que les éléments porteurs (7) montés en position fixe sont équipés de tubulures (15) d'alimentation en air de refroidissement dont l'ouverture débouche vers le bas et les éléments porteurs mobiles sont équipés de caissons (25) d'alimentation en air de refroidissement qui comportent des tubulures latérales (26) de raccord à l'alimentation de l'air.

20. Dispositif selon la revendication 1, caractérisé en ce qu'un élément de retenue (24) orienté transversalement sur la largeur (B) est disposé au moins à l'extrémité inférieure de l'installation (5) de transfert de la charge, cet élément étant destiné à assurer la retenue d'une couche de base (6') de matériau sensiblement immobile.

21. Dispositif selon la revendication 1, caractérisé en ce qu'une fente transversale (36) est ménagée entre deux éléments porteurs (7''') qui sont voisins dans le sens du transport de la charge (3''') et au moins une plaque de poussée (37) prévue dans cette fente (36) transversalement par rapport à la zone de réception (1''') et mobile alternativement dans la direction du transport de la charge fait partie d'un poussoir rotatif (38) qui est commandé alternativement ou moyen d'un arbre de pivotement (39) disposé transversalement sous l'installation de transfert de la charge (5''').

22. Dispositif selon la revendication 21, caractérisé en ce que la plaque de poussée (37) est prévue dans la région d'un décrochement de liaison (33) en forme de gradin prévu entre deux groupes (31, 32) d'éléments porteurs qui se succèdent dans la direction du transfert de la charge (3''').

23. Dispositif selon la revendication 1, caractérisé en ce que les trous de passage d'air (8, 8', 108) sont réalisés sous la forme de forages ou de fentes.

24. Dispositif selon la revendication 23, caractérisé en ce que la surface totale de l'ouverture des trous de passage d'air est dimensionnée de manière que l'air de refroidissement pénètre dans la charge à une vitesse maximale d'environ 50 m/s.

25. Dispositif selon au moins l'une des revendications précédentes, caractérisé en ce qu'au moins la partie des éléments porteurs (7, 7', 7''') qui entre en contact avec la charge est réalisée en matériau résistant à la chaleur, en particulier en fonte d'acier, et les parties sousjacentes sont réalisées en tôle d'acier moins résistante à la chaleur.

*FIG. 1*

FIG.2

FIG.3

EP 0 219 745 B1

EP 0 219 745 B1

FIG.4

FIG.5

FIG. 7

EP 0 219 745 B1

FIG.6

FIG. 8

FIG.9